# FASCICULE DE BREVET EUROPEEN

(11) **EP 1 927 461 B1**
(45) Date de publication et mention de la délivrance du brevet: **29.04.2009**
(21) Numéro de dépôt: 07120597.5
(22) Date de dépôt: 13.11.2007
(51) Int. Cl.: B29C 49/58, B29C 49/06, B29C 49/12

(54) **Installation de soufflage de corps creux**
Anlage zum Blasen von Hohlkörpern
Installation for blowing hollow bodies

(30) Priorité: 28.11.2006 FR 0610417
(43) Date de publication de la demande: 04.06.2008
(73) Titulaire: SIDEL PARTICIPATIONS, 76930 Octeville-sur-Mer (FR)
(72) Inventeur: Mie, Patrick c/o Sidel Participations, 76930 Octeville s/Mer (FR); Souffes, Denis c/o Sidel Participations, 76930 Octeville s/Mer (FR)
(74) Mandataire: Cabinet Plasseraud

(56) Documents cités:
- EP-A- 1 529 620
- EP-A1- 0 437 381
- WO-A-01/53063
- US-A- 5 169 705

## Description

La présente invention a pour objet les installations de soufflage de corps creux dans un moule de soufflage permettant, à partir de corps creux en matière thermoplastique, telle que du PET, préalablement chauffée, d'obtenir des récipients tels que des flacons ou des bouteilles.

De manière plus précise, l'invention porte sur une installation de soufflage pour la fabrication de corps creux en matière thermoplastique par soufflage ou étirage-soufflage de récipients dans une cavité de moulage d'un moule, laquelle installation est agencée selon le préambule de la revendication 1. Une installation de ce type est connue d'après les documents WO 01/53063 A et EP-A1-0 437 381.

Il est entendu par « corps creux » tout élément creux permettant la formation par chauffage et soufflage ou étirage-soufflage d'un récipient et présentant une partie de corps et une partie de col, le col étant déjà réalisé à la forme et aux dimensions définitives du col du récipient. Un corps creux est donc soit une préforme avant la première étape de soufflage ou étirage-soufflage, soit un récipient intermédiaire ayant déjà fait l'objet d'une opération de soufflage ou d'étirage-soufflage et, ayant été réchauffé, doit être à nouveau soufflé ou étiré-soufflé.

Deux types de tuyères de soufflage sont couramment utilisés pour permettre cette opération de soufflage une fois le corps creux placé dans le moule avec le col en saillie du moule.

Un premier type de tuyère couramment utilisé est, comme illustré à la figure 7 du document FR 2 790 704, une tuyère permettant de créer un contact étanche contre le buvant du col du corps creux, c'est-à-dire une tuyère présentant un tube de soufflage dont l'extrémité libre, usuellement appelée « nez de tuyère », est apte coopérer de façon étanche avec le buvant du col. Généralement, le nez de tuyère présente une forme extérieure tronconique et le diamètre à la base du tronc de cône est inférieur à celui de l'ouverture du col permettant ainsi l'introduction du tube de soufflage de la tuyère dans le col. Du fait de l'augmentation du diamètre de la section tronconique, un contact s'établit entre le tronc du cône et le bord périphérique intérieur du buvant du col de la préforme permettant ainsi de former un contact étanche entre le col et la tuyère lors de l'opération de soufflage. De manière alternative, l'extrémité de la tuyère présente un épaulement externe contre lequel vient en appui le buvant du col de la préforme permettant ainsi de créer un contact étanche entre le col et l'épaulement du tube de soufflage de la tuyère. Dans ce cas, l'extrémité libre du tube de soufflage peut être réalisé sensiblement cylindrique. Les tuyères du type à contact étanche contre le buvant sont en pratique préférentiellement utilisées pour la fabrication de récipients résistants à la chaleur et destinés à contenir des liquides remplis à chaud.

Un second type de tuyères également couramment utilisé est dit « tuyère à cloche », notamment telle que décrite dans le document FR 2 764 544 ou également illustrée à la figure 1 du document FR 2 790 704. Une tuyère à cloche comprend un tube avec une extrémité de soufflage entourée par une jupe. Lorsque la tuyère est en position pour le soufflage, l'extrémité en cloche de la tuyère coiffe le col de la préforme, la jupe prenant alors appui de façon étanche contre la surface supérieure du moule. Les tuyères du type à cloche sont en pratique préférentiellement utilisées pour la fabrication de récipients destinés à contenir des liquides carbonatés.

Afin de permettre l'abaissement des tuyères vers les cols de préforme et la formation d'une liaison fluidique étanche entre le col de la préforme et l'extrémité du tube de soufflage, soit directement par appui et/ou insertion de l'extrémité du tube de soufflage sur et/ou dans le col lors de l'utilisation d'une tuyère du type à contact étanche contre le buvant, soit indirectement lors de l'utilisation d'une tuyère du type à cloche, chaque type de tuyère est associé à l'un respectivement de deux types de vérins dont les structures et les modes de fonctionnement sont déterminés en fonction du type de la tuyère. Il est ainsi nécessaire de modifier une grande partie de l'installation de soufflage lorsqu'on souhaite passer de la fabrication d'un type de récipients à la fabrication de récipients de l'autre type.

Pour ce faire, des opérations de conversion relativement longues doivent être menées sur l'installation de soufflage. En effet, il convient alors de débrancher les vérins de tuyères, de procéder à l'échange des vérins, de raccorder d'autres vérins avec les nouvelles tuyères puis ensuite de paramétrer le nouveau mode de fonctionnement des vérins pour la nouvelle chaîne de fabrication des récipients.

Dans des installations de moulage du type carrousel tournant équipées d'un grand nombre de moules (plusieurs dizaines, typiquement de l'ordre de vingt à quarante moules), ces opérations de branchement / débranchement / paramétrage s'avèrent particulièrement longues, et donc onéreuses, tout en nécessitant la présence de personnel qualifié.

Il serait donc particulièrement intéressant de mettre en oeuvre des moyens permettant l'adaptation de l'installation de soufflage en un temps aussi rapide que possible, pouvant être effectué facilement, utilisant des moyens mécaniques simples et ne nécessitant pas un nouveau paramétrage du mode de fonctionnement des vérins.

La présente invention se propose de résoudre ces problèmes liés à l'art antérieur.

La présente invention porte sur une installation de soufflage pour la fabrication de corps creux en matière thermoplastique par soufflage ou étirage-soufflage de récipients dans une cavité de moulage d'un moule, cette installation de soufflage étant agencée selon le préambule de la revendication 1 et qui, pour permettre la réalisation d'une installation propre à fonctionner selon deux modes de fonctionnement, est caractérisée par les dispositions énoncées dans la partie caractérisante de la revendication 1.

Les revendications dépendantes sont l'objet d'autres modes de réalisation.

De manière plus précise et d'un point de vue structurel, le vérin, d'axe central (X-X), comprend un piston supérieur apte à venir en butée contre un épaulement supérieur et un piston inférieur apte à venir en butée contre un épaulement inférieur, la course du piston inférieur étant plus grande que la course du piston supérieur, le vérin se présentant sous la forme d'un cylindre présentant un orifice radial supérieur, un orifice radial intermédiaire et un orifice radial inférieur, l'orifice radial intermédiaire étant situé dans le même plan radial que l'épaulement supérieur et l'orifice radial inférieur étant situé dans le même plan radial que l'épaulement inférieur.

De manière alternative, le vérin, d'axe central (X-X), comprend un piston supérieur apte à venir en butée contre un épaulement supérieur et un piston inférieur apte à venir en butée contre un rebord d'une coiffe par l'intermédiaire d'une bague entourant la tige du piston inférieur.

Toujours de manière alternative, le vérin, d'axe central (X-X), comprend un piston supérieur apte à venir en butée contre un épaulement supérieur et un piston inférieur apte à venir en butée contre la surface du moule

Afin de permettre une solidarisation et une désolidarisation rapide de la tuyère sur le vérin, la tuyère du type à contact étanche contre le buvant et la tuyère du type à cloche sont fixées au vérin par des moyens de filetage constitués d'un filetage prévu sur le vérin et d'un alésage taraudé prévu dans la tuyère du type à contact étanche contre le buvant et dans la tuyère du type à cloche.

Selon un mode possible de fonctionnement de la commande des pistons du vérin, les moyens de commande sont configurés pour commander successivement :
- la descente simultanée des pistons supérieur et inférieur jusqu'à ce que le piston supérieur vienne en butée contre l'épaulement supérieur par injection d'un fluide sous pression dans l'orifice radial supérieur ;
- la descente du piston inférieur par injection d'un fluide sous pression dans l'orifice radial intermédiaire ;
- la remontée du piston inférieur jusqu'à ce qu'il vienne en butée contre le bord inférieur du piston supérieur par injection d'un fluide sous pression dans l'orifice radial inférieur, le piston inférieur restant en appui contre l'épaulement supérieur ; et
- la remontée simultanée des pistons supérieur et inférieur jusqu'à ce que le piston supérieur vienne en appui contre le fond du vérin par injection d'un fluide sous pression dans l'orifice radial inférieur.

Selon un autre mode possible de fonctionnement du vérin selon l'invention, les moyens de commande sont configurés pour commander successivement :
- la descente du piston inférieur jusqu'à ce qu'il vienne en butée contre la surface du moule par injection de fluide sous pression dans l'orifice radial intermédiaire, le piston supérieur restant en appui contre le fond du vérin, et
- la remontée du piston inférieur jusqu'à ce qu'il vienne en butée contre le bord inférieur du piston supérieur par injection de fluide sous pression dans l'orifice radial inférieur, le piston supérieur restant contre le fond du vérin.

La présente invention est maintenant décrite à l'aide d'exemples uniquement illustratifs et nullement limitatifs de la portée de la présente invention et à partir des figures ci-jointes dans lesquelles :
- la figure 1 est une vue en coupe schématique d'un vérin de tuyère selon l'invention ;
- la figure 2 est une vue en coupe schématique d'une tuyère du type à contact étanche contre le buvant ;
- la figure 3 est une vue en coupe schématique d'une tuyère du type à cloche ;
- les figures 4 à 6 sont des vues en coupe schématiques représentant trois étapes successives du procédé de soufflage à l'aide d'un vérin de tuyère associé à une tuyère du type à contact étanche contre le buvant, et
- les figures 7 et 8 sont deux vues en coupe schématiques représentant les deux étapes successives du procédé de soufflage à l'aide d'un vérin de tuyère associé à une tuyère du type à cloche.

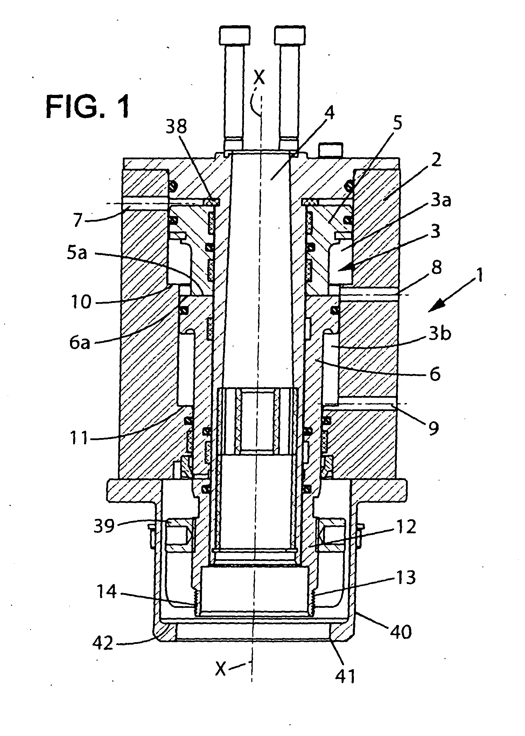

La figure 1 représente une vue en coupe d'un vérin de tuyère 1 d'axe central (X-X), se présentant sous la forme d'un cylindre 2 avec un double alésage 3 interne et un corps 4 tubulaire axial.

Le vérin de tuyère 1 comporte au moins un piston (5, 6) de tuyère mobile et, plus précisément, est du type à double effet à deux étages en série équipé de deux pistons (5, 6), c'est-à-dire qu'il présente un premier piston dit piston 5 « supérieur » et un second piston dit piston 6 « inférieur », ces pistons (5, 6) alignés coaxialement étant aptes à coulisser intérieurement dans le double alésage 3 interne, composé d'un grand alésages interne supérieur 3a et d'un petit alésage interne inférieur 3b, sur le pourtour extérieur du corps 4 tubulaire.

Dans la suite de la description, il doit être compris que les termes « supérieur », « inférieur », « montée », « descente », « haut » et « bas » sont utilisés en référence à la disposition des éléments tels que représentés sur les figures. Ainsi, ces termes ne sont utilisés que par mesure de clarté et ne doivent pas être interprétés comme des limitations à la portée de l'invention.

Le piston 5 supérieur est de dimension telle qu'il est apte à venir en contact par son bord 5a inférieur sur le bord 6a supérieur du piston 6 inférieur.

Le cylindre 2 présente trois orifices radiaux : un orifice 7 radial supérieur, un orifice 8 radial intermédiaire et un orifice 9 radial inférieur. L'orifice 7 radial supérieur est avantageusement relié à des moyens d'injection de fluide, par exemple du type air comprimé, permettant d'entraîner, lors de l'injection de ce fluide dans l'orifice 7 radial supérieur, le coulissement simultané des pistons (5, 6) supérieur et inférieur selon un mouvement axial de descente, c'est-à-dire un mouvement dirigé vers le bas vers le moule et le corps creux (non représentés sur la figure 1 mais de type connus en soi).

Les pistons (5, 6) supérieur et inférieur sont aptes à venir en butée respectivement contre un épaulement (10, 11) supérieur et inférieur prévu sur la paroi intérieure de l'orifice 3 interne axial lors de leur coulissement axial de descente. De manière avantageuse, la course du piston 6 inférieur est plus grande que la course du piston 5 supérieur.

L'épaulement 11 inférieur est prévu sensiblement dans le même plan radial que l'orifice 9 radial inférieur et l'épaulement 10 supérieur est avantageusement également prévu sensiblement dans le même plan radial que l'orifice 8 radial intermédiaire.

L'orifice 9 radial inférieur est connecté à des moyens d'injection de fluide (non représentés sur les figures par mesure de clarté, mais de type connus en soi) permettant, lors de l'injection d'un fluide à travers cet orifice 9 radial inférieur, d'entraîner le coulissement du piston 6 inférieur, et éventuellement du piston 5 supérieur, verticalement selon un mouvement de remontée vers le haut, c'est-à-dire selon une direction en éloignement du moule et du corps creux.

De même, l'orifice 8 radial intermédiaire est également connecté à des moyens d'injection en fluide (non représentés sur les figures par mesure de clarté, mais de type connus en soi) permettant, lors de l'injection d'un fluide à travers cet orifice 8 radial intermédiaire d'entraîner la descente du piston 6 inférieur une fois que le piston 5 supérieur est en butée contre l'épaulement 10 supérieur, l'orifice 7 radial supérieur étant fermé et l'orifice 9 radial inférieur étant ouvert.

Ainsi, de par l'injection contrôlée de fluide sous pression dans les orifices (7, 8, 9) du vérin 1 à partir de moyens d'injection en fluide de type connus en soi, tels que des distributeurs pneumatiques multivoies, il est possible d'obtenir :
- lors de l'injection de fluide par l'orifice 7 supérieur, un coulissement vers le bas des deux pistons (5, 6) jusqu'à ce que le piston 5 supérieur vienne en butée contre l'épaulement 10 supérieur, les orifices (8, 9) radiaux intermédiaire et inférieur étant tous deux ouverts. Dans ce cas de figure, du fait que la course du piston 6 inférieur est plus grande que la course du piston 5 supérieur, le piston 6 inférieur ne vient pas en butée contre l'épaulement 11 inférieur ;
- lors de l'injection de fluide à travers l'orifice 8 intermédiaire, la descente du piston 6 inférieur une fois que le piston 5 supérieur est en butée contre l'épaulement 10 supérieur, l'orifice 7 radial supérieur étant fermé et l'orifice 9 radial inférieur étant ouvert, et
- lors de l'injection de fluide à travers l'orifice 9 radial inférieur, un coulissement de remontée, soit des deux pistons (5, 6) supérieur et inférieur si le fluide est injecté à une pression suffisante, les orifices (7, 8) radiaux intermédiaire et supérieur étant ouverts, soit uniquement du piston 6 inférieur jusqu'à ce que le bord 6a supérieur du piston 6 inférieur vienne en butée contre le bord 5a inférieur du piston 5 supérieur, le piston 5 supérieur restant en butée contre l'épaulement 10 supérieur, l'orifice 8 radial intermédiaire étant alors ouvert et l'orifice 7 radial supérieur étant fermé.

Le piston 6 inférieur présente avantageusement une partie 12 inférieure tubulaire, qui constitue la tige 12 du vérin 1, avec une extrémité 13 libre en forme de couronne ayant, sur son pourtour extérieur, un filetage 14.

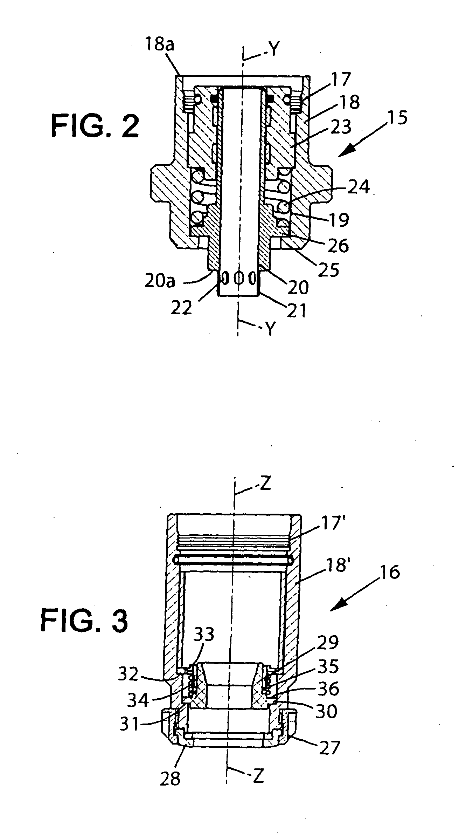

De cette manière, le vérin 1 de tuyère présente une tige 12 à extrémité 13 filetée apte à se visser et à s'associer soit sur une tuyère 15 du type à contact étanche contre le buvant, telle qu'illustrée sur la figure 2, soit sur une tuyère 16 du type à cloche, telle qu'illustrée sur la figure 3.

En effet, la tuyère 15 du type à contact étanche contre le buvant comporte un alésage 17 interne taraudé apte à s'engager sur le filetage 14 externe de la couronne 13 du vérin 1.

La tuyère (15, 16), supportée de façon amovible à l'extrémité 13 libre du piston 6 inférieur, est ainsi propre à établir une liaison fluidique étanche avec le col d'un récipient placé dans la cavité de moulage d'un moule.

De manière générale, la tuyère 15 du type à contact étanche contre le buvant se présente sous la forme d'un corps de manchon 18 d'axe central (Y-Y) ayant un alésage 19 interne traversé axialement par un tube 20 de soufflage avec un épaulement 20a et une extrémité 21 libre cylindrique, ayant une pluralité de lumières 22 du type évents disposées sensiblement selon un même plan radial

Le tube 20 de soufflage traverse une bague 23 cylindrique fixe prévue dans le corps de manchon 18 de la tuyère 15 du type à contact étanche contre le buvant.

Le volume intérieur de la couronne 13 du vérin 1 est de forme complémentaire à la forme de la bague 23 cylindrique de manière à permettre le maintien de la bague 23 cylindrique dans la couronne 13 ainsi que la formation d'une solidarisation étanche entre la tuyère 15 du type à contact étanche contre le buvant et le vérin 1.

Plus précisément, de par la présence du taraudage 17 sur une partie du pourtour intérieur de l'alésage 19 interne du corps du manchon 18, la tuyère 15 est apte à être solidarisée à la tige 12 du vérin 1. Ainsi, le coulissement vertical du piston 6 inférieur entraîne également le déplacement vertical du corps de manchon 18 de la tuyère 15 du type à contact étanche contre le buvant. De par cette solidarisation, l'axe central (X-X) du vérin 1 est alors confondu avec l'axe central (Y-Y) de la tuyère 15.

Des moyens 24 ressorts sont prévus entre la bague 23 cylindrique et le tube 20 de la tuyère 15 du type à contact étanche contre le buvant. Plus précisément, le corps de manchon 18 présente un rebord 25 inférieur, dirigé radialement vers l'axe central (Y-Y) de la tuyère 15 du type à contact étanche contre le buvant, contre lequel vient en butée un disque 26 formant un renflement de matière du tube 20 de soufflage sous la poussée du ressort 24. Du fait de la force de tension exercée par les moyens 24 ressorts entre la bague 23 cylindrique fixe et le disque 26 du tube 20 de soufflage, un écartement donné est maintenu entre ces deux éléments (23, 26) au repos, quand le tube 20 n'est pas en tension ou en appui sur le col du corps creux. Les moyens 24 ressort permettent également de maintenir un appui élastique entre le tube 20 et le corps creux malgré la tension de soufflage qui, au gonflage, tend à relever le tube 20.

Avantageusement, le tube d'élongation ou d'étirage du corps creux lors de l'opération de soufflage est apte à traverser le tube 20 de soufflage.

La figure 3 représente une vue en coupe schématique d'une tuyère 16 du type à cloche également apte à se solidariser par un alésage 17' interne taraudé sur le vérin de tuyère 1.

La tuyère 16 du type à cloche se présente sous la forme générale d'un corps de manchon 18' d'axe central (Z-Z) avec une extrémité 27 inférieure en forme de jupe ou couronne sur laquelle est fixé un joint 28 à lèvres permettant d'assurer l'étanchéité de l'opération de soufflage. Plus précisément, lors de l'opération de soufflage, la jupe 27 est apte à coiffer le col d'un corps creux en appui et en saillie du moule.

La tuyère 16 du type à cloche comprend une bague 29 d'appui, prévu intérieurement dans le corps de manchon 18' et axialement mobile.

La bague d'appui 29 présente une saillie annulaire 30 apte à venir en butée contre un premier décrochement 31 inférieur prévu intérieurement de manière périphérique dans le corps de manchon 18'.

Un second décrochement 32 supérieur est également prévu intérieurement dans le corps de manchon 18' sur lequel est bloquée axialement une bague annulaire 33 comprenant une paroi cylindrique 34 d'étendue sensiblement axiale.

Des moyens ressort 35 sont disposés entourant la paroi cylindrique 34 et prenant appui sur la saillie annulaire 30 et la bague annulaire 33.

L'orifice central de la bague 29 d'appui permet l'engagement d'une tige d'élongation ayant pour fonction l'élongation et l'étirage du corps creux dans la cavité du moule lors de l'opération de soufflage.

Contrairement à la tuyère 15 du type à contact étanche contre le buvant, le rebord inférieur 36 de la bague 29 d'appui ne s'insère pas dans le col du corps creux mais vient en appui contre le buvant du corps creux de manière à bloquer en position le corps creux, et plus précisément à plaquer la collerette du corps creux contre la surface supérieure du moule.

Du fait de la présence des moyens ressort 35, il est possible, lors du placage du rebord inférieur 36 de la bague d'appui 29 contre le buvant du corps creux, d'avoir une légère contraction des moyens ressort 35 (à savoir une diminution de l'écartement entre la saillie annulaire 30 et la bague annulaire 32) permettant d'exercer une force axiale sur le buvant du corps creux et de garantir le placage de la collerette contre la surface supérieure du moule.

Lors de la solidarisation du vérin de tuyère 16 du type à cloche avec le vérin 1, l'axe central (X-X) du vérin 1 est sensiblement confondu avec l'axe central (Z-Z) de la tuyère 16 du type à cloche.

Les dimensions du vérin 1, et notamment les dimensions de son filetage 14, sont telles que la tuyère 15 de type buvant et la tuyère 16 du type à cloche sont toutes deux aptes à s'engager et à se fileter sur le même vérin de tuyère 1 et sont donc directement interchangeables sur le même vérin 1.

Le vérin de tuyère 1 est avantageusement connecté à des moyens pneumatiques de commande de type connus en soi permettant de commander l'injection de fluides dans les orifices (7, 8, 9) du vérin de tuyère 1 et ainsi de modifier le mode de fonctionnement du vérin 1.

En effet, bien qu'il soit nécessaire de modifier le mode de fonctionnement du vérin de tuyère 1 en fonction du type de tuyère (15, 16) qui est fixé sur le vérin 1 et donc en fonction du type de récipient ou bouteille que l'on souhaite souffler, les moyens de commande selon l'invention sont identiques que le vérin 1 soit associé à une tuyère 15 du type à contact étanche contre le buvant ou à une tuyère 16 du type à cloche.

Plus précisément, les moyens pneumatiques de commande du vérin 1 sont aptes à commander le vérin 1 entre une position dans laquelle la tuyère (15, 16) est relevée au-dessus du moule et une position de soufflage dans laquelle la tuyère (15, 16) établit une liaison fluidique étanche soit entre le col du corps creux et la tuyère 15, soit entre le moule, dans lequel est placé le corps creux, et la tuyère 16.

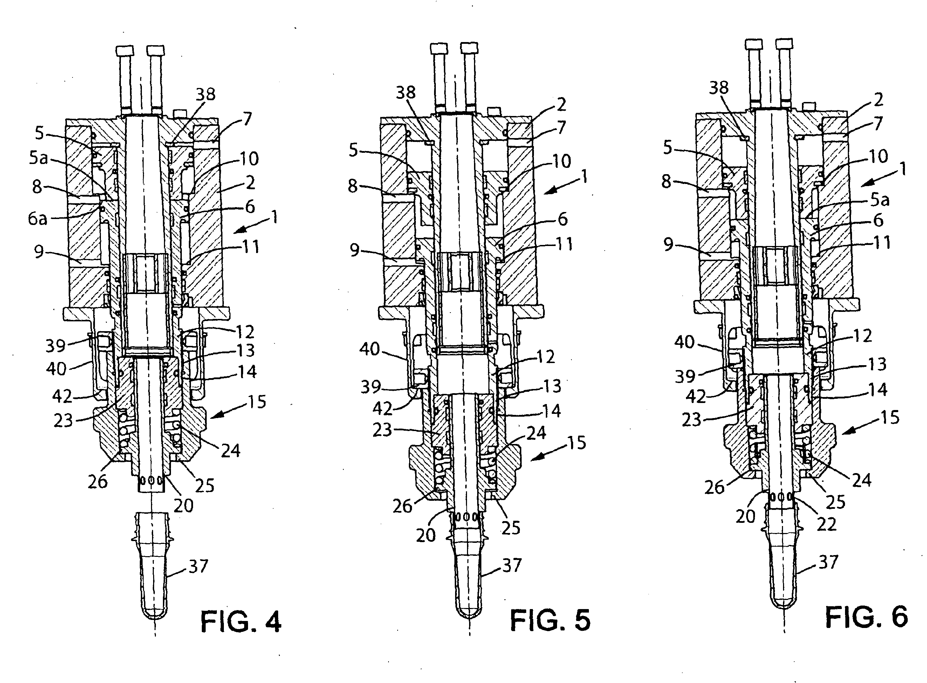

Les figures 4 à 6 représentent trois étapes successives lors de l'opération de soufflage, avec un étirage éventuel, d'un corps creux 37 avec une tuyère 15 du type à contact étanche contre le buvant.

Par mesure de clarté, il n'est pas représenté sur les figures 4 à 8 le moule, de type connu en soi, sur lequel prend appui la collerette d'un corps creux 37 lors de l'opération de soufflage et/ou d'étirage.

La figure 4 représente une vue en coupe schématique d'une tuyère 15 du type à contact étanche contre le buvant avant l'opération de soufflage, et éventuellement d'étirage, du corps creux 37.

Dans cette position, les pistons (5, 6) supérieur et inférieur sont tous deux dans une position dite « haute » et ne peuvent subir qu'un mouvement de descente.

Ainsi, le piston 6 inférieur est en appui contre le bord 5a inférieur du piston 5 supérieur, le piston 5 supérieur étant lui-même en appui contre une rondelle 38 de butée entourant le corps 4 tubulaire du vérin 1. La rondelle 38 est avantageusement prévue dans le fond du vérin 1 sensiblement dans le même plan radial que l'orifice 7 radial supérieur.

Afin de faire coulisser selon un mouvement de descente les deux pistons (5, 6), un fluide est injecté à travers l'orifice 7 radial supérieur permettant d'entraîner le coulissement des pistons (5, 6) supérieur et inférieur selon un mouvement de descente. Le piston 5 supérieur vient alors en butée contre l'épaulement 10 supérieur, le piston 6 inférieur restant en appui contre le rebord inférieur 5a du piston 5 supérieur. Du fait de la différence de courses entre les pistons (5, 6), pour entraîner la descente du piston 6 inférieur jusqu'à ce que la bague 39 vienne en butée contre le rebord 42 inférieur de la coiffe 40, il convient alors de fermer l'orifice 7 radial supérieur, d'ouvrir l'orifice 9 radial inférieur puis d'injecter du fluide sous pression par l'orifice 8 radial intermédiaire. La descente des pistons (5, 6) se fait donc en deux temps.

Les pistons (5, 6) sont alors dans la position telle que représentée dans la figure 5, c'est-à-dire dans une positon dite « basse ».

La descente des deux pistons (5, 6) entraîne également la descente de la tuyère 15 du type à contact étanche contre le buvant du fait que le piston 6 inférieur est solidarisé à la tuyère 15 par le filetage 14 de la couronne 13 vissé sur l'alésage 17 de la tuyère 15.

Afin d'éviter un écrasement du col du corps creux 37 lors de la création du contact étanche entre le tube 20 de soufflage et le col, les vitesses de coulissement des pistons (5, 6) sont contrôlées de manière telle que la vitesse de coulissement du piston 6 inférieur, quand celui-ci descend d'une position où son rebord 6a supérieur est en contact avec le bord 5a inférieur du piston 5 supérieur à une position où il est en appui contre le buvant, n'entraîne pas l'écrasement ainsi que la déformation du col venant en contact avec l'épaulement 20a du tube 20 de soufflage.

Ainsi, les vitesses de descente des deux pistons (5, 6) jusqu'à ce que le piston 5 supérieur vienne en appui contre l'épaulement 10 supérieur peut être fixée par des moyens de commande à une valeur plus élevée que la vitesse de descente du piston 6 inférieur.

Après fixation et solidarisation d'une tuyère (15, 16) sur le vérin 1, le rebord supérieur 18a du corps de manchon 18 de la tuyère (15, 16) est en butée contre une bague 39 de guidage prévue autour de la partie 12 inférieure tubulaire du piston 6 inférieur.

La bague 39 de guidage est prévue coulissante dans une coiffe 40 cylindrique, coaxiale au cylindre 2 du vérin 1, et présentant un orifice 41 inférieur sensiblement cylindrique et de diamètre sensiblement égal au diamètre de la tuyère (15, 16) et présentant un rebord 42 inférieur dirigé radialement.

Ainsi, lors du coulissement du piston 6 inférieur, la bague 39 de guidage coulisse également dans la coiffe 40.

La distance entre la bague 39 de guidage et le rebord 42 inférieur permet de paramétrer la longueur de la course du piston 6 inférieur.

De plus, la longueur axiale de la tuyère 15, 16 permet également de paramétrer la longueur de la course nécessaire du piston 6 inférieur. La bague 39 de guidage ne vient donc pas obligatoirement en butée contre le rebord 42 inférieur de la coiffe 40.

De manière alternative, la bague 39 de guidage est un contre-écrou apte à serrer le corps de manchon (18, 18') à l'aide du filetage 14 sur lequel vient se fixer la tuyère (15, 16), permettant ainsi de renforcer le maintien entre le vérin 1 et la tuyère (15, 16).

Lors de la descente des deux pistons (5, 6), et dans le cas où le vérin 1 est solidarisé à une tuyère 15 du type à contact étanche contre le buvant, l'extrémité libre du tube 20 de soufflage s'insère dans le col du corps creux 37 du fait de l'abaissement du tube 20 de soufflage d'une distance correspondant à la distance de coulissement du piston 6 inférieur dans l'orifice 3 interne du corps de manchon 2 du vérin 1. Le tube 20 de soufflage est alors en appui élastique étanche par son épaulement 20a contre le bord supérieur du col du corps creux 37 et la bague 39 de guidage est en appui sur le rebord 42 inférieur de la coiffe 40.

II est dans les compétences de l'homme du métier d'adapter la distance entre l'extrémité libre du tube 20 de soufflage et le col du corps 37 creux placé dans le moule en fonction de la distance de coulissement du piston 6 inférieur pour ainsi avoir un appui élastique étanche du tube 20 contre le col du corps 37 creux.

Ensuite, l'opération de soufflage du corps 37 creux peut alors avoir lieu. Suite à cette opération de soufflage, afin de permettre l'évacuation de l'air de soufflage et le dégazage du fluide sous pression soufflé dans le corps creux 37, il est nécessaire de relever partiellement le tube 20 de soufflage par rapport au col du corps 37 creux de manière à ce que le fluide de soufflage puisse s'évacuer à travers la pluralité de lumières 22 du type évents prévues sur l'extrémité du tube 20 de soufflage.

Pour permettre cette évacuation, un fluide est injecté dans l'orifice 9 radial inférieur à une pression telle que le piston 6 inférieur subisse uniquement un coulissement vertical de remontée de manière à ce que celui-ci vienne alors en butée contre le bord 5a inférieur du piston 5 supérieur, le piston 5 supérieur restant en place en butée contre l'épaulement 10 supérieur. Lors de cette remontée, afin d'éviter également la remontée du piston 5 supérieur, un fluide est injecté dans l'orifice 7 radial supérieur et l'orifice 8 radial intermédiaire est ouvert entraînant ainsi uniquement un coulissement du piston 6 inférieur.

Les lumières 22 du type évents sont avantageusement prévues à une distance telle du bord inférieur de l'extrémité libre du tube 20 de soufflage qu'elles permettent l'évacuation du fluide de soufflage quand le piston 6 inférieur a coulissé verticalement en remontant entre l'endroit où il est butée contre le rebord 42 par l'intermédiaire de la bague 32 et l'endroit où il est en butée contre le bord 5a inférieur du piston 5 supérieur, le piston 5 supérieur étant alors toujours en butée et en appui contre l'épaulement 10 supérieur. Les pistons (5, 6) sont alors dans la position telle que représentée sur la figure 6.

Il est dans les compétences de l'homme du métier d'adapter le temps d'arrêt de dégazage du corps creux quand le corps creux a été soufflée par une tuyère 15 du type à contact étanche contre le buvant et que le tube 20 de soufflage est partiellement remonté afin d'évacuer le fluide soufflé par les évents 22.

Pour ensuite relever totalement le tube 20 de soufflage et placer un nouveau corps 37 creux sous le tube 20 de soufflage, l'orifice 7 radial supérieur et l'orifice 8 radial intermédiaire sont ouverts et un fluide est injecté dans l'orifice 9 radial inférieur permettant ainsi de faire coulisser en remontée le piston 5 supérieur et le piston 6 inférieur pour que le piston 5 supérieur vienne en butée contre le fond du vérin 1, et plus précisément contre la rondelle 38 de butée, et que le piston 6 inférieur reste en butée et en appui contre le bord 5a inférieur du piston 5 supérieur. Les pistons (5, 6) sont alors dans la position « haute » telle que représentée à la figure 4.

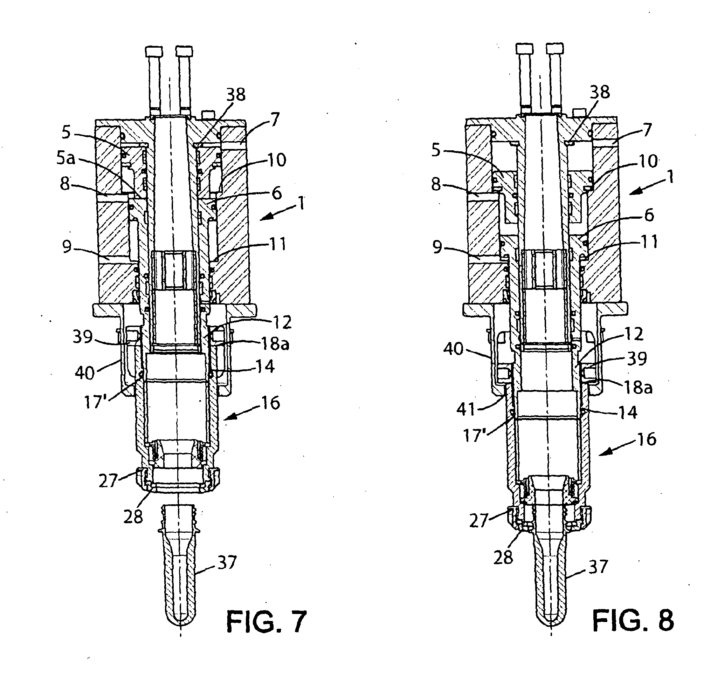

Les figures 7 et 8 représentent également les deux étapes successives de l'opération de soufflage d'un corps creux 37 à partir d'une tuyère 16 du type à cloche.

Lors de la première étape, et tel que représenté sur la figure 7, les pistons (5, 6) supérieur et inférieur sont tous deux dans leur position « haute », à savoir que le piston 5 supérieur est en butée contre la rondelle 38 de butée placée dans le fond du vérin 1 et le piston 6 inférieur est en butée contre le bord 5a inférieur du piston 5 supérieur.

Afin que le rebord inférieur de la coiffe 27 avec le joint 28 à lèvres vienne en appui étanche contre la surface du moule dans lequel est placé le corps 37 creux, ou contre une pièce d'usure incorporée dans la surface du moule, un fluide est injecté dans l'orifice 7 radial supérieur permettant de faire coulisser d'abord simultanément selon un mouvement de descente les deux pistons (5, 6), le piston 5 supérieur venant alors en appui contre l'épaulement 10 supérieur puis un fluide est injecté dans l'orifice 8 afin de faire descendre le piston 6 inférieur jusqu'à ce qu'il vienne en butée sur la surface du moule par l'intermédiaire de la coiffe 27 et du joint 28 à lèvres. La descente des deux pistons (5, 6) se fait selon le même principe tel que précédemment décrit quand le vérin 1 est solidarisé à une tuyère 15 du type à contact étanche contre le buvant.

Cette première opération entraîne également le coulissement de descente de la bague 39 de guidage dans la coiffe 40, à la différence près que la bague 39 ne vient pas en butée contre le rebord 42 inférieur.

Toutefois, contrairement à ce qui a été décrit pour le mode de fonctionnement d'une tuyère 15 du type à contact étanche contre le buvant où le tube 20 de soufflage doit être partiellement coulissé selon un mouvement ascendant en remontée pour permettre l'évacuation du fluide de soufflage par les lumières 22 du type évents après l'opération de soufflage du corps creux 37 dans le moule, cette étape d'évacuation du fluide de soufflage n'est pas nécessaire et les pistons (5, 6) sont tous deux commandés de manière simultanée selon un mouvement de remontée et de descente. Ainsi, à partir d'une tuyère 16 du type à cloche, les pistons (5, 6) ne basculent uniquement qu'entre deux positons, à savoir une première position « haute » et telle que décrite dans la figure 7 et une position « basse » et telle que décrite dans la figure 8, où le piston 5 supérieur est en appui contre l'épaulement 10 supérieur et où le piston 6 inférieur est en appui contre la surface du moule par l'intermédiaire de la coiffe 27 et du joint 28 à lèvres.

Néanmoins, il convient de noter que lors de la remontée des pistons (5, 6) une fois que ceux-ci sont tous deux dans la positon basse en butée, l'étape de remontée des pistons (5, 6) se fait en deux étapes par injection d'un fluide dans la chambre 9 de travail inférieure, les orifices (7, 8) radiaux intermédiaire et supérieur étant alors ouverts. Le fluide doit être injecté à une pression suffisante pour entraîner le coulissement du piston 6 inférieur jusqu'à ce qu'il vienne en butée contre le piston 5 supérieur puis ensuite par le coulissement en remontée des deux pistons (5, 6) jusqu'à ce que le piston 5 supérieur vienne en appui contre la rondelle 38 d'appui placée dans le fond du vérin 1.

Le vérin 1 de tuyère est connecté à des moyens de commande fluidique de type connus en soi (par exemple des distributeurs pneumatiques multivoies) permettant de commander le vérin à double pistons (5, 6) aussi bien selon un mode de fonctionnement tel que décrit dans les figures 4 à 6, que selon un mode de fonctionnement tel que décrit dans les figures 7 et 8.

De manière alternative, selon un autre mode de fonctionnement de la commande des pistons (5, 6), quand le vérin 1 est associé à une tuyère 16 du type à cloche, le piston 5 supérieur reste plaqué contre le fond du vérin 1 et aucun fluide n'est injecté à travers l'orifice 7 radial supérieur. Dans ce cas, le piston 6 inférieur ne coulisse qu'entre deux positions : une première position où le piston 6 inférieur est en contact contre le bord 5a inférieur du piston 5 supérieur et une deuxième position où le piston 6 inférieur est en appui contre la surface du moule par l'intermédiaire de la coiffe 27 et du joint 28 à lèvres après injection d'un fluide sous pression dans l'orifice 8 radial intermédiaire et ouverture de l'orifice 9 radial inférieur. La remontée du piston 6 inférieur se fait alors de manière inversée par injection de fluide sous pression dans l'orifice 9 radial inférieur et ouverture de l'orifice 8 radial intermédiaire.

Ainsi, selon l'invention, il est possible de remplacer facilement et rapidement des tuyères 16 du type à cloche par des tuyères 15 du type à contact étanche contre le buvant, et inversement, en dévissant et en désolidarisant les tuyères (15, 16) et en les remplaçant par d'autres tuyères (15, 16), du fait de la présence du filetage 14 sur la partie tubulaire 12 du piston 6 inférieur et du filetage (17, 17') sur les tuyères du type à contact étanche contre le buvant et à cloche (15, 16).

Ainsi, un utilisateur qui souhaite modifier le mode de fonctionnement d'une installation de soufflage n'a uniquement qu'à modifier la tuyère (15, 16) et non à modifier également le vérin 1 de tuyère, les moyens de commande restant identiques entre une commande d'une tuyère 15 du type à contact étanche contre le buvant et une commande d'une tuyère 16 du type à cloche.

## Revendications

1. Installation de soufflage pour la fabrication de corps creux en matière thermoplastique par soufflage ou étirage-soufflage de récipients (37) dans une cavité de moulage d'un moule, cette installation de soufflage comprenant :
- une tuyère (15, 16) propre à établir une liaison fluidique étanche avec le col, en saillie hors d'une surface du moule, d'un récipient (37) placé dans la cavité de moulage ;
- un vérin (1) de tuyère comportant au moins un piston de tuyère mobile qui est solidaire de ladite tuyère (15, 16) de soufflage ; et
- des moyens pneumatiques de commande du vérin (1) entre une position relevée dans laquelle la tuyère (15, 16) est relevée au-dessus du moule et une position abaissée de soufflage dans laquelle la tuyère (15, 16) de soufflage établit une liaison fluidique étanche avec le col d'un récipient (37) placé dans la cavité de moulage;
- le vérin (1) de tuyère étant un vérin à double effet à deux étages en série équipé de deux pistons (5, 6) respectivement supérieur et inférieur,
caractérisée
- en ce que la tuyère (15, 16) de soufflage est fixée de façon amovible sur l'extrémité libre (13) du piston (6) inférieur, et
en ce que les moyens pneumatiques de commande sont agencés pour commander le coulissement desdits pistons (5, 6) selon deux modes de fonctionnement, à savoir :
soit un premier mode de fonctionnement mis en oeuvre lorsque la tuyère (15) de soufflage est du type à contact étanche contre le buvant du col du récipient, soit un second mode de fonctionnement mis en oeuvre lorsque la tuyère (16) de soufflage est du type à cloche en contact étanche contre ladite surface du moule dans lequel est placé le récipient (37).

2. Installation de soufflage selon la revendication 1, **caractérisée en ce que** ledit vérin (1) de tuyère comprend un piston (5) supérieur apte à venir en butée contre un épaulement (10) supérieur et un piston (6) inférieur apte à venir en butée contre un épaulement (11) inférieur, la course du piston (6) inférieur étant plus grande que la course du piston (5) supérieur.

3. Installation de soufflage selon la revendication 1, **caractérisée en ce que** ledit vérin (1) de tuyère comprend un piston (5) supérieur apte à venir en butée contre un épaulement (10) supérieur et un piston (6) inférieur apte à venir en butée contre un rebord (42) d'une coiffe (40) par l'intermédiaire d'une bague (39) entourant la tige (12) du piston (6) inférieur.

4. Installation de soufflage selon la revendication 1, **caractérisée en ce que** ledit vérin (1) de tuyère comprend un piston (5) supérieur apte à venir en butée contre un épaulement (10) supérieur et un piston (6) inférieur apte à venir en butée contre ladite surface du moule.

5. Installation de soufflage selon l'une quelconque des revendications 1 à 4, **caractérisée en ce que** le vérin (1) de tuyère comprend un cylindre (2) présentant un orifice (7) radial supérieur, un orifice (8) radial intermédiaire et un orifice (9) radial inférieur.

6. Installation de soufflage selon les revendications 1, 2 et 5, **caractérisée en ce que** ledit orifice (8) radial intermédiaire est situé dans le même plan radial que l'épaulement (10) supérieur et **en ce que** ledit orifice (9) radial inférieur est situé dans le même plan radial que l'épaulement (11) inférieur.

7. Installation de soufflage selon l'une des revendications précédentes, **caractérisée en ce que** ladite tuyère (15) de soufflage du type à contact étanche contre le buvant et ladite une tuyère (16) de soufflage du type à cloche sont fixées audit vérin (1) de tuyère par des moyens (14, 17, 17') de filetage constitués d'un filetage (14) prévu sur ledit vérin (1) de tuyère et d'un alésage (17, 17') taraudé prévu dans ladite tuyère (15) de soufflage du type à contact étanche contre le buvant et dans ladite tuyère (16) de soufflage du type à cloche.

8. Installation de soufflage selon l'une des revendications 5 à 7, **caractérisée en ce que,** ledit vérin (1) de tuyère étant équipé soit avec ladite tuyère (15) de soufflage du type à contact étanche contre le buvant, soit avec ladite tuyère (16) de soufflage du type à cloche, les moyens de commande sont configurés pour commander successivement :
- la descente simultanée des pistons (5, 6) supérieur et inférieur jusqu'à ce que le piston (5) supérieur vienne en butée contre l'épaulement (10) supérieur par injection d'un fluide sous pression dans l'orifice (7) radial supérieur ;
- la descente du piston (6) inférieur par injection d'un fluide sous pression dans l'orifice (8) radial intermédiaire ;
- la remontée du piston (6) inférieur jusqu'à ce qu'il vienne en butée contre le bord (5a) inférieur du piston (5) supérieur par injection d'un fluide sous pression dans l'orifice (9) radial inférieur, le piston (5) inférieur restant en appui contre l'épaulement (10) supérieur ; et
- la remontée simultanée des pistons (5, 6) supérieur et inférieur jusqu'à ce que le piston (5) supérieur vienne en appui contre le fond dudit vérin (1) par injection d'un fluide sous pression dans l'orifice (9) radial inférieur.

9. Installation de soufflage selon l'une des revendications 5 à 7, **caractérisée en ce que,** ledit vérin (1) de tuyère étant équipé avec ladite tuyère (16) de soufflage du type à cloche, les moyens de commande sont configurés pour commander successivement :
- la descente du piston (6) inférieur jusqu'à ce qu'il vienne en butée contre ladite surface du moule par injection de fluide sous pression dans l'orifice (8) radial intermédiaire, le piston (5) supérieur restant en appui contre le fond dudit vérin (1) de tuyère, et
- la remontée du piston (6) inférieur jusqu'à ce qu'il vienne en butée contre le bord (5a) inférieur du piston (5) supérieur par injection de fluide sous pression dans l'orifice (9) radial inférieur, le piston (5) supérieur restant contre le fond dudit vérin (1) de tuyère.

## Claims

1. Blow-molding installation for manufacturing thermoplastic hollow bodies by blow-molding or stretch-blow-molding containers (37) in a molding cavity of a mold, this blow-molding installation comprising:
- a nozzle (15, 16) adapted to provide a sealed fluidic connection with the neck, projection from a face of the mold, of a container (37) placed in the molding cavity;
- a nozzle actuator (1) comprising at least one moving nozzle piston which is integral with said blowing nozzle (15, 16); and
- pneumatic means for controlling the actuator (1) between a raised position in which the nozzle (15, 16) is raised above the mold and a lowered blow-molding position in which the blowing nozzle (15, 16) provides a sealed fluidic connection with the neck of a container (37) placed in the molding cavity;
- the nozzle actuator (1) being a double-acting, series double stage actuator provided with two respectively upper and lower pistons (5, 6);
**characterized:**
**in that** the blowing nozzle (15, 16) is fixed removably on the free end (13) of the lower piston (6), and
**in that** the pneumatic control means are designed to control the sliding of said pistons (5, 6) slide according to two operating modes, namely:
either a first operating mode implemented when the blowing nozzle (15) is of the type that provides sealed contact with the mouth of the neck of the container,
or a second operating mode implemented when the blowing nozzle (16) is of the bell type with sealed contact against said face of the mold in which the container (37) is placed.

2. Blow-molding installation according to claim 1, **characterized in that** said nozzle actuator (1) comprises an upper piston (5) adapted to come into abutment against an upper shoulder (10) and a lower piston (6) adapted to come into abutment against a lower shoulder (11), the stroke of the lower piston (6) being longer than the stroke of the upper piston (5).

3. Blow-molding installation according to claim 1, **characterized in that** said nozzle actuator (1) comprises an upper piston (5) adapted to come into abutment against an upper shoulder (10) and a lower piston (6) adapted to come into abutment against a rim (42) of a cap (40) via a ring (39) surrounding the shank (12) of the lower piston (6).

4. Blow-molding installation according to claim 1, **characterized in that** said nozzle actuator (1) comprises an upper piston (5) adapted to come into abutment against an upper shoulder (10) and a lower piston (16) adapted to come into abutment against said face of the mold.

5. Blow-molding installation according to any one of claims 1 to 4, **characterized in that** the nozzle actuator (1) comprises a cylinder (2) having an upper radial port (7), an intermediate radial port (8) and a lower radial port (9).

6. Blow-molding installation according to claims 1, 2 and 5, **characterized in that** said intermediate radial port (8) lies in the same radial plane as the upper shoulder (10) and **in that** said lower radial port (9) lies in the same radial plane as the lower shoulder (11).

7. Blow-molding installation according to one of the preceding claims, **characterized in that** said blowing nozzle (15) of the type that provides sealed contact with the mouth and said one blowing nozzle (16) of the bell type are fixed to said nozzle actuator (1) by screw-thread means (14, 17, 17') consisting of a screw thread (14) provided on said nozzle actuator (1) and of a tapped bore (17, 17') provided in said blowing nozzle (15) of the type that provides sealed contact with the mouth and in said blowing nozzle (16) of the bell type.

8. Blow-molding installation according to one of claims 5 to 7, **characterized in that,** said blowing nozzle (1) being provided either with said blowing nozzle of the type providing a sealed contact against the mouth or with said blowing nozzle of the bell type, the control means are designed to, in succession:
- simultaneously lower the upper and lower pistons (5, 6) until the upper piston (5) comes into abutment against the upper shoulder (10) by injecting a pressurized fluid into the upper radial port (7);
- lower the lower piston (6) by injecting a pressurized fluid into the intermediate radial port (8);
- raise the lower piston (6) until it comes into abutment against the lower edge (5a) of the upper piston (5) by injecting a pressurized fluid into the lower radial port (9), the lower piston (5) remaining resting against the upper shoulder (10); and
- simultaneously raise the upper and lower pistons (5, 6) until the upper piston (5) comes to rest against the end wall of said actuator (1) by injecting a pressurized fluid into the lower radial port (9).

9. Blow-molding installation according to one of claims 5 to 7, **characterized in that,** said nozzle actuator (1) being provided with said blowing nozzle (16) of the bell type, the control means are designed to, in succession:
- lower the lower piston (6) until it comes into abutment against said face of the mold by injecting pressurized fluid into the intermediate radial port (8), the upper piston (5) remaining resting against the end wall of said nozzle actuator (1), and
- raise the lower piston (6) until it comes into abutment against the lower edge (5a) of the upper piston (5) by injecting pressurized fluid into the lower radial port (9), the upper piston (5) remaining against the end wall of said nozzle actuator (1).

## Patentansprüche

1. Blasformanlage zur Herstellung von Hohlkörpern aus thermoplastischem Material durch Blasformen oder Streckblasen von Behältern (37) in einem Formhohlraum einer Form, wobei diese Blasformanlage Folgendes umfasst:
- eine eigene Düse (15, 16) zum Herstellen einer dichten Fluidverbindung mit dem Hals, der außerhalb einer Oberfläche der Form über einen in dem Formhohlraum angeordneten Behälter (37) vorsteht;
- einen Düsenzylinder (1), der mindestens einen beweglichen, fest mit der genannten Blasdüse (15, 16) verbundenen Düsenkolben umfasst; und
- pneumatische Mittel zur Steuerung des Zylinders (1) zwischen einer hochgezogenen Stellung, in der die Düse (15, 16) über der Form hochgezogen ist, und einer abgesenkten Stellung zum Blasformen, in der die Blasdüse (15, 16) eine fluiddichte Verbindung mit dem Hals eines in dem Formhohlraum angeordneten Behälters (37), herstellt;
- wobei der Düsenzylinder (1) ein doppelt, in zwei Etagen in Serie wirkender Zylinder ist, der mit zwei Kolben (5, 6), entsprechend einen oberen und einen unteren, ausgestattet ist,
**dadurch gekennzeichnet,**
**dass** die Blasdüse (15, 16) abnehmbar an dem freien Ende (13) des unteren Kolbens (6) befestigt ist, und
**dass** die pneumatischen Steuerungsmittel zur Steuerung der Gleitbewegung der genannten Kolben (5, 6) gemäß zwei Funktionsweisen eingerichtet sind, und zwar:
entweder einer ersten Funktionsweise, die durchgeführt wird, wenn die Blasdüse (15) von der in dichtem Kontakt mit der Mündung des Halses des Behälters stehenden Art ist,
oder einer zweiten Funktionsweise, die durchgeführt wird, wenn die Blasdüse (16) eine Glockendüse ist, die in dichtem Kontakt mit der genannten Oberfläche der Form steht, in der der Behälter (37) angeordnet ist.

2. Blasformanlage nach Anspruch 1, **dadurch gekennzeichnet, dass** der genannte Düsenzylinder (1) einen oberen Kolben (5), der auf einer oberen Schulter (10) zum Aufliegen kommen kann, und einen unteren Kolben (6) umfasst, der auf einer unteren Schulter (11) zum Aufliegen kommen kann, wobei der Hub des unteren Kolbens (6) größer als der Hub des oberen Kolbens (5) ist.

3. Blasformanlage nach Anspruch 1, **dadurch gekennzeichnet, dass** der genannte Düsenzylinder (1) einen oberen Kolben (5), der auf einer oberen Schulter (10) zum Aufliegen kommen kann, und einen unteren Kolben (6) umfasst, der mittels eines Rings (39), der den Stift (12) des unteren Kolbens (6) umgibt, auf einer Kante (42) einer Kappe (40) zum Aufliegen kommen kann.

4. Blasformanlage nach Anspruch 1, **dadurch gekennzeichnet, dass** der genannte Düsenzylinder (1) einen oberen Kolben (5), der auf einer oberen Schulter (10) zum Aufliegen kommen kann, und einen unteren Kolben (6) umfasst, der auf der genannten Oberfläche der Form zum Aufliegen kommen kann.

5. Blasformanlage nach einem der Ansprüche 1 bis 4, **dadurch gekennzeichnet, dass** der Düsenzylinder (1) einen Zylinder (2) umfasst, der eine obere radiale Öffnung (7), eine zwischenliegende radiale Öffnung (8) und eine untere radiale Öffnung (9) aufweist.

6. Blasformanlage nach den Ansprüchen 1, 2 und 5, **dadurch gekennzeichnet, dass** sich die genannte zwischenliegende radiale Öffnung (8) auf derselben radialen Ebene wie die obere Schulter (10) befindet und dass sich die genannte untere radiale Öffnung (9) auf derselben radialen Ebene wie die untere Schulter (11) befindet.

7. Blasformanlage nach einem der vorhergehenden Ansprüche, **dadurch gekennzeichnet, dass** die Blasdüse (15) der in dichtem Kontakt mit der Mündung des Halses des Behälters stehenden Art und die Glockenblasdüse (16) an dem genannten Düsenzylinder (1) durch Gewindemittel (14, 17, 17') befestigt sind, die aus einem auf dem genannten Düsenzylinder (1) vorgesehenen Gewinde (14) und einer Gewindebohrung (17, 17') gebildet sind, die in der Blasdüse (15) der in dichtem Kontakt mit der Mündung des Halses des Behälters stehenden Art und die Glockenblasdüse (16) vorgesehen ist.

8. Blasformanlage nach einem der Ansprüche 5 bis 7, **dadurch gekennzeichnet, dass** der genannte Düsenzylinder (1) entweder mit der genannten Blasdüse (15) der in dichtem Kontakt mit der Mündung des Halses des Behälters stehenden Art oder der Glockenblasdüse (16) ausgestattet ist, und die Steuerungsmittel konfiguriert sind, nacheinander Folgendes zu steuern:
- das gleichzeitige Absenken des oberen und des unteren Kolbens (5, 6), bis der obere Kolben (5) zum Aufliegen auf der oberen Schulter (10) kommt, durch Einspritzen eines unter Druck stehenden Fluids in die obere radiale Öffnung (7);
- das Absenken des unteren Kolbens (6) durch Einspritzen eines unter Druck stehenden Fluids in die zwischenliegende radiale Öffnung (8);
- das Heraufziehen des unteren Kolbens (6), bis er auf der unteren Kante (5a) des oberen Kolbens (5) zum Aufliegen kommt, durch Einspritzen eines unter Druck stehenden Fluids in die untere radiale Öffnung (9), wobei der obere Kolben (5) auf der oberen Schulter (10) aufliegen bleibt; und
- das gleichzeitige Heraufziehen des oberen und des unteren Kolbens (5, 6), bis der obere Kolben (5) zum Aufliegen auf dem Boden des genannten Zylinders (1) kommt, durch Einspritzen eines unter Druck stehenden Fluids in die untere radiale Öffnung (9).

9. Blasformanlage nach einem der Ansprüche 5 bis 7, **dadurch gekennzeichnet, dass** der genannte Düsenzylinder (1) mit der Glockenblasdüse (16) ausgestattet ist, und die Steuerungsmittel konfiguriert sind, nacheinander Folgendes zu steuern:
- das Absenken des unteren Kolbens (6), bis er zum Aufliegen auf der genannten Oberfläche der Form kommt, durch Einspritzen eines unter Druck stehenden Fluids in die zwischenliegende radiale Öffnung (8), wobei der obere Kolben (5) auf dem Boden des genannten Düsenzylinders (1) aufliegen bleibt, und
- das Heraufziehen des unteren Kolbens (6), bis er auf der unteren Kante (5a) des oberen Kolbens (5) zum Aufliegen kommt, durch Einspritzen eines unter Druck stehenden Fluids in die untere radiale Öffnung (9), wobei der obere Kolben (5) auf dem Boden des genannten Düsenzylinders (1) aufliegen bleibt.
